(19) Europäisches Patentamt
European Patent Office
Office européen des brevets

(11) Veröffentlichungsnummer: **0 061 024**
**B1**

# (12) EUROPÄISCHE PATENTSCHRIFT

(45) Veröffentlichungstag der Patentschrift: **29.05.85**

(21) Anmeldenummer: **82101563.3**

(22) Anmeldetag: **01.03.82**

(51) Int. Cl.⁴: **C 08 G 18/38,** C 08 G 18/50, C 08 G 18/66, C 08 L 75/08, C 09 D 5/18

## (54) Gegebenenfalls geschäumte Intumeszenzmassen und ihre Verwendung.

(30) Priorität: **12.03.81 DE 3109352**

(43) Veröffentlichungstag der Anmeldung: **29.09.82 Patentblatt 82/39**

(45) Bekanntmachung des Hinweises auf die Patenterteilung: **29.05.85 Patentblatt 85/22**

(84) Benannte Vertragsstaaten: **AT CH DE FR GB IT LI**

(56) Entgegenhaltungen:
**EP - A - 0 004 618**
**FR - A - 1 325 195**
**US - A - 3 235 517**
**US - A - 3 396 129**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen (DE)**
Erfinder: **Zaby, Gottfried, Dr., Goethestrasse 57 c, D-4047 Dormagen (DE)**

EP 0 061 024 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft gegebenenfalls geschäumte Intumeszenzmassen auf Basis von Polyurethanen, die als Rezepturbestandteil eine Kombination aus speziellen Polyethern, Cyanursäurederivaten und phosphorhaltigen Polyhydroxylverbindungen enthalten und plastisch-elastischen Charakter haben.

Als Intumeszenzmassen werden solche Materialien verstanden, die bei Einwirkung von Feuer und Hitze aufschäumen und dabei einen isolierenden und feuerabweisenden Schaum ausbilden, der die rückwärtigen Bezirke von der Feuereinwirkung schützt. Solche Intumeszenzmassen sind in Form von Lacken, Beschichtungen, Mörteln und Kitten bekannt.

Gute Intumeszenzmassen sollten bei Flammenzutritt ihr Volumen mindestens verdoppeln können und außerdem beständig sein gegen Wasserangriff. Insbesondere ist es von technischem Interesse, wenn diese Eigenschaften kombiniert werden können mit Halogenfreiheit und geringem Raumgewicht, d. h. gewisser Isolierwirkung im unbeanspruchten Zustand, sowie Plastizität bzw. Flexibilität und/oder Elastizität.

Elastisch-plastische Intumeszenzmassen mit guter Formbeständigkeit könnten bei in-situ Anwendung oder als Halbzeuge wie Bänder, Platten, Wickel, Profile, Beschichtungen, Granulate oder Verfüllungen eine Vielzahl von Anwendungen im Bereich des vorbeugenden Brandschutzes finden.

Die Mitverwendung von Melamin bei der Herstellung von Weichschaumstoffen unter Verwendung von im wesentlichen linearen Polyolen vorzugsweise Polyetherpolyolen, ist prinzipiell bekannt (DE-OS 2 815 554). Solche Schaumstoffe haben zwar den Charakter der Schwerentflammbarkeit und brennen bei Beflammung nicht mehr vollständig ab. Auf keinen Fall haben sie jedoch den Charakter von Intumeszenzmassen; eine Volumenvergrößerung bei Beflammung unter Ausbildung eines feuerabweisenden Schaumes wird nicht beobachtet.

Gemäß einem älteren Vorschlag (deutsche Patentanmeldung P 3 025 217.6) lassen sich flammwidrige Dichtungsmassen, die frei von Phosphor und Halogen sind, unter Verwendung von verzweigten Hydroxylgruppen aufweisenden Polyestern herstellen. Solche Dichtungsmassen haben ebenfalls keinen Intumeszenzcharakter, d. h. sie schäumen bei Beflammung nicht auf.

In einem weiteren älteren Vorschlag (deutsche Patentanmeldung P 3 025 309.9) werden gegebenenfalls geschäumte Intumeszenzmassen beschrieben, die erhalten werden durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. aromatischen Hydroxycarbonsäuren oder deren Salze und
4. gegebenenfalls Wasser und/oder weiteren organischen Verbindungen mit gegenüber Isocyanaten reaktionsfähigen Wasserstoffatomen.

Gemäß diesem Vorschlag können auch Hydroxylgruppen aufweisende Polyester sowie Melamin mitverwendet werden: dabei handelt es sich jedoch nicht um die erfindungsgemäß zu verwendenden hochverzweigten, d. h. polyfunktionellen Polyethertypen, sondern um die Mitverwendung von linearen Polyestern. Hierbei werden jeweils harte Produkte erhalten.

Gegenstand eines weiteren älteren Vorschlags (deutsche Patentanmeldung P 3 041 731.3) sind gegebenenfalls geschäumte Intumeszenzmassen, erhalten durch Umsetzung von

Polyisocyanaten mit

mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und

Hydroxylgruppen aufweisenden Polyestern der OH-Zahl 140 bis 300, erhalten durch Umsetzung von zwei bis zehn C-Atome aufweisenden Polycarbonsäuren mit mindestens zwei Polyolen aus zwei verschiedenen der drei folgenden Gruppen

a) mehr als drei OH-Gruppen aufweisende Hydroxylverbindungen vom Molekulargewicht bis 200,
b) drei OH-Gruppen aufweisende Hydroxylverbindungen vom Molekulargewicht bis 150,
c) zwei OH-Gruppen aufweisende Hydroxylverbindungen vom Molekulargewicht bis 80,

wobei ein Polyol der Gruppe a) angehören soll, und

Cyanursäure und/oder Cyanursäurederivaten und

gegebenenfalls Wasser und/oder weiteren organischen Verbindungen mit gegenüber Isocyanaten reaktionsfähigen Wasserstoffatomen.

Die empfohlenen Polyester sind hochviskos, so daß aus Gründen der Verarbeitbarkeit Reaktionskomponenten mit geringerer Viskosität erwünscht sind.

Wenngleich derartige ggf. geschäumte Intumeszenzmassen auch die wünschenswerten Eigenschaften in zufriedenstellendem Maße besitzen, besteht dennoch die Befürchtung, daß die dort eingesetzten Polyester im Langzeitverhalten gegenüber Bedingungen, unter denen Verseifung eintreten könnte, zum Versagen Anlaß geben. Daher besteht das Bedürfnis, die Polyesterkomponente gegen verseifungsbeständige, weniger zähe und mit Isocyanaten reaktionsfähige Materialien ähnlicher anwendungstechnischer Eigenschaften ganz oder teilweise austauschen zu können.

Es wurde nunmehr gefunden, daß das überraschenderweise dann möglich ist, wenn man anstelle der Polyester spezielle, mehr als bifunktionelle Polyether auf Basis von Ethylenoxid verwendet, deren durchschnittliche OH-Zahl zwischen 150 und 500 liegt.

Hierbei ist die Beobachtung bemerkenswert, daß das Ethylenoxid nur in untergeordnetem molaren Umfang durch andere Alkylenoxide wie etwa Propylenoxid ausgetauscht werden kann, da sonst bei Beflammung der erhaltenen Intumeszenzmassen ein unerwünscht starkes Nachbrennen festgestellt wird und die Intumeszenzeigenschaften zugunsten eines Abschmelzens verlorengehen.

Die US-A 3 396 129 beschreibt Alkydharz-gebundene Lacke, die als Brandschutz vermittelndes Pigment Umsetzungsprodukte aus Isocyanaten, speziellen Hydroxyalkylphosphaten bzw. -phosphonaten, Melamin und niedermolekularen Polyalkoholen in gemahlener Form enthalten können.

Gemäß dieser US-A enthalten Intumeszenzkompositionen gemäß Stand der Technik einen Kohlenstoffbildner (Carbonific) aus der Klasse der Polyalkohole, eine Phosphorkomponente und ggf. eine aufschäumende Komponente. Da alle diese Komponenten bisher zu wasserlöslich sind, sollen diese gemäß US-A z. B. in Gestalt eines besonders wasserunlöslich gemachten Melaminphosphats verbessert werden. Die Wasserunlöslichkeit der Polyalkohole soll verbessert werden, indem man sie in mahlfähige spröde Urethane oder Polyglykolcarbonate überführt.

Die Überführung in mahlbare, spröde Urethane durch Reaktion mit Isocyanaten kann gemäß US-A auch in Gegenwart und Mitreaktion von einbaufähigen Phosphaten und in Gegenwart von Melamin vorgenommen werden. Auch so erhält man — in allerdings schwierig zu beherrschender Reaktion — spröde, mahlbare, wasserresistente Produkte. Der US-A ist zu entnehmen (Spalte 3/31 — Spalte 3/43), daß nicht ohne weiteres eine Komponente durch eine andere ersetzt werden kann, wenn man brauchbare Produkte erhalten will, daß man vielmehr eine sehr genaue Komposition einhalten muß.

Das erfindungsgemäß einzusetzende spezielle Hydroxylgruppen aufweisende phosphorhaltige Kondensationsprodukt (Komponente 2) wird in der US-A nicht genannt.

Es wurde nun überraschenderweise festgestellt, daß es möglich ist, anstelle von spröden Pigmentharzen zu für die Herstellung von Profilen, Bandagen und sonstigen Formkörpern mit breitem Eigenschafts- und Raumgewichtsbereich geeigneten Polymerwerkstoffen zu gelangen, wenn man nicht Polyalkohole, sondern Polyether mit spezieller, genau definierter Zusammensetzung als Reaktionskomponente (Komponente 3) verwendet und auf den Polyalkohol oder sein Urethan ganz verzichtet.

Tatsächlich wirkt in den erfindungsgemäßen Intumeszenzmassen das Polyetherurethan als »Carbonific«.

Daß dies möglich ist, ist als besonders überraschend anzusehen, denn in ihm ist zwischen den aus der US-A als Carbonific bekannten Polyalkoholen und die durch gemäß Lehre der US-A eingeführte Urethangruppe noch die ganze Polymerkette des Polyethermoleküls eingeschoben, welches grundsätzlich brennbare Substanz darstellt, so daß zu erwarten war, daß die Brandschutzeigenschaften solcher Polyesterurethane stark herabgesetzt sind. Es war nicht bekannt, daß solche Polyether als »Carbonific« im Sinne von Kohlenstoffschaumbildner dienen.

Gegenstand der Erfindung sind gegebenenfalls geschäumte Intumeszenzmassen, erhalten durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. mehr als bifunktionellen Polyethern einer durchschnittlichen OH-Zahl von 150 bis 500, die durch Anlagerung von Alkylenoxiden, die zu 50—100 Gew.-%, vorzugsweise zu 100 Gew.-%, aus Ethylenoxid bestehen, an niedermolekulare Starter erhalten worden sind, und
4. Cyanursäure und/oder Cyanursäurederivaten und
5. gegebenenfalls Wasser und
6. gegebenenfalls weiteren organischen Verbindungen mit gegenüber Isocyanaten reaktionsfähigen Wasserstoffatomen.

Erfindungsgemäß sind solche Intumeszenzmassen bevorzugt, die durch Umsetzung von 15 bis 55 Gew.-Teilen eines Polyisocyanats (1) mit 100 Gew.-Teilen eines Gemisches, bestehend aus 10 bis 45 Gew.-% an mindestens zwei Hydroxylgruppen aufweisenden phosphorhaltigen Kondensationsprodukten (2) und 20 bis 55 Gew.-% an Polyethern (3) und 10 bis 60 Gew.-% an Cyanursäure(derivaten) (4) und 0 bis 10 Gew.-% Wasser (5) und/oder 0 bis 25 Gew.-% an weiteren organischen Verbindungen mit gegenüber Isocyanaten reaktionsfähigen Wasserstoffatomen (6) erhalten worden sind.

Besonders bevorzugt sind Intumeszenzmassen, dadurch gekennzeichnet, daß als Polyisocyanate Polyphenylpolymethylpolyisocyanate verwendet werden, wie sie durch Anilin-Formaldehyd-Kondensation und anschließende Phosgenierung erhalten werden, und auch solche, die als mindestens zwei Hydroxylgruppen aufweisende Kondensationsprodukte solche der Formel

$$(RO)_2PO-CH_2-N=(CHX-CHX-OH)_2$$

enthalten, worin in der Formel

R = $C_1-C_8$-Alkyl oder $C_1-C_8$-Hydroxylalkyl und
X = H oder Methyl

bedeuten.

Als Polyether (3) sind Anlagerungsprodukte von Ethylenoxid an 3 bis 4 funktionelle Starter mit OH-Zahlen von 200—400 besonders bevorzugt.

Die Erfindung betrifft auch die Verwendung der neuen Intumeszenzmassen als Hohlraumfüllungen, Fugenabdichtungen und Beschichtungen mit Intumeszenzeigenschaften. Die Erfindung betrifft ferner die Verwendung der Intumeszenzmassen, erhalten durch Reaktion in Formen oder durch nachträgliche Verformung der ausreagierten Reaktionsgemische, zur Herstellung von Formkörpern mit Intumeszenzeigenschaften.

Im Falle der Erfindung werden ausgesprochen weiche, gegebenenfalls geschäumte Intumeszenzmassen erhalten. Bei den geschäumten Typen wurde überraschenderweise noch gefunden, daß sie den Charakter von gegen Wasser beständigen, plastisch-elastischen geschäumten Massen haben, d. h. sie lassen sich leicht zusammendrücken und erholen sich nur langsam unter Ausbildung der ursprünglichen Form. Dieses unerwartete Verhalten ist als technisch besonders vorteilhaft zu bewerten, z. B. wenn es gilt, solche Intumeszenzmassen in Form vorgefertigter Bänder, U-förmig gebogener Profile, oder sonstiger Formkörper leicht in Fugen oder Hohlräume einzubringen, wo sie sich dann wieder ausdehnen und den zu verschließenden Spalt mit all seinen gegebenen Formunregelmäßigkeiten ausfüllen.

Plastische, elastische oder plastisch-elastische Intumeszenzmassen, wie sie erfindungsgemäß erhalten werden, besitzen ein besonderes technisches Interesse, weil sich daraus hergestellte Vorformlinge besonders einfach in Fugen oder Hohlräume eindrücken lassen, weil sie auch zur Umwickelung von Kabeln und Rohren verwendet werden können und ihre Anwendbarkeit durch Erschütterungen des Applikationsfeldes nicht beeinträchtigt wird. Ihre erhebliche Resistenz gegen Wasserzutritt ist weiterhin ein interessanter technischer Vorteil.

Die erfindungsgemäß zugänglichen, weichen, flexiblen Intumeszenzmassen sind naturgemäß schwer entflammbar, auch ohne Mitverwendung von Halogenverbindungen. Sie schäumen bei Beflammung bis zur Zehnfachen ihres ursprünglichen Volumens auf und bilden dabei einen feuerabweisenden Schaum, der die rückwärtigen Bereiche vor weiterem Flammenzutritt abschirmt.

Sie können auch in der Nähe (d. h. zumeist unterhalb) ihrer Aufschäumtemperatur thermoplastisch verarbeitet werden. Bei geeigneter Temperaturführung im Laufe der thermoplastischen Verarbeitung (z. B. durch Pressen, Extrudieren) zu Formkörpern können diese geschäumten oder massiven Charakter haben. Das thermoplastische Verhalten unter gewissen Bearbeitungsbedingungen kann auch zur Modifizierung von Formteilen z. B. Platten aus geschäumtem Material herangezogen werden, etwa zum Trennen oder Verschweißen mit anderen Materialien oder auch zum Prägen bzw. bleibendem Verformen.

Überraschenderweise zeigen die erfindungsgemäßen Intumeszenzmassen ein gegenüber den nach der deutschen Patentanmeldung P 3 041 731.3 erhältlichen Typen wesentlich stärkeres Aufschäumen bei Beflammung, was als deutlicher Vorteil, z. B. bei Dichtungslippen, zu werten ist.

Bei der Herstellung der neuen Intumeszenzmaterialien kann kontinuierlich oder diskontinuierlich gearbeitet werden. Die Herstellung kann durch Vermischen der Komponenten bzw. bereits vorgemischter Komponentengemische vor Ort geschehen und die Reaktionsmischung maschinell oder per Hand in z. B. zu verschließende Öffnungen bzw. beheizte oder unbeheizte Formen drucklos oder unter Druck eingegossen werden, wo sie dann aufschäumt bzw. aushärtet. Sie kann bei entsprechender technischer Ausrüstung auf die zu schützenden Substrate und Untergründe aufgesprüht, aufgestrichen oder aufgegossen werden. Es ist auch in Betracht zu ziehen, daß man mit den erfindungsgemäßen Reaktionsgemischen zunächst Halbzeuge, z. B. Schaumstoffe, Profile oder Beschichtungen herstellt und diese dann in technisch erforderlicher Weise weiterverarbeitet, z. B. durch Schneiden, durch Warmverformen, Granulieren, Mahlen oder Mischen, Beschichten und Verkleben.

Durch Kombination der Reaktionsgemische mit geschäumten oder massiven anorganischen oder organischen Zuschlagstoffen, wie z. B. Polystyrolschaum, Polyurethanschaum, Phenoplasten, Aminoplasten oder Kies oder Blähton, Harnstoff- oder Phenolharzschäumen, Schaumglas, Glasfasern, Holz, Mineralwolle, Bims usw., können auch Verbunde mit speziellen Intumeszenzeigenschaften erhalten werden. Die Anwendung der erfindungsgemäßen Intumeszenzmassen zur Herstellung von mit Fasern oder Drähten bzw. Geweben, Strängen oder Vliesen aus organischen oder anorganischen Materialien verstärkten Formteilen oder ihre Verwendung als Bestandteil in Mehrschicht- bzw. Sandwichaufbauten sind ebenfalls in Betracht zu ziehen; ebenso die Kombination mit anderen Intumeszenzmaterialien auf organischer oder anorganischer Basis.

Als Füllstoffe kommen allein oder in Kombinationen insbesondere Aluminiumoxydhydrate, Kreide, Kaolin, Glas und massive oder hohle Perlen aus silikatischem Material in Betracht, z. B. sogenannte Mikroballons; Aluminiumoxydhydrate sind wegen ihrer Dehydratisierungsfähigkeit neben Hohlperlen bevorzugt.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2—4, vorzugsweise 2, und
Q einen aliphatischen Kohlenwasserstoffrest mit 2—18, vorzugsweise 6—10 C-Atomen, einen cycloaliphatischen Kohlenwasserstoffrest mit 4—15, vorzugsweise 5—10 C-Atomen, einen aromatischen Kohlenwasserstoffrest mit 6—15, vorzugsweise 6—13 C-Atomen, oder einen araliphatischen Kohlenwasserstoffrest mit 8—15, vorzugsweise 8—13 C-Atomen,

bedeuten, z. B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.
Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyanuratgruppen, Harnstoffgruppen oder Biuretgruppen aufweisenden Polyisocyanate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Mindestens zwei Hydroxylgruppen aufweisende phosphorhaltige Kondensationsprodukte, wie sie z. B. durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, erhalten werden können. Derartige Kondensationsprodukte sind an sich bekannt, z. B. aus der DE-PS 1 143 022, US-PS 3 076 010, DE-AS 1 803 747 und DE-AS 1 928 265.
Erfindungsgemäß bevorzugt sind als mindestens zwei Hydroxylgruppen aufweisende phosphorhaltige Kondensationsprodukte solche der Formel

$$(RO)_2-PO-CH_2-N=(CHX-CHX-OH)_2,$$

in der

R = $C_1-C_8$-Alkyl oder $C_1-C_8$-Hydroxyalkyl, vorzugsweise Ethyl oder Hydroxyethyl, und
X = H oder Methyl, vorzugsweise H,

bedeuten.

3. Mehr als bifunktionelle Polyether einer durchschnittlichen OH-Zahl von 150 bis 500, die durch Anlagerung von Alkylenoxiden, die zu 50—100 Gew.-% aus Ethylenoxid bestehen, an Zerewitinow-aktive niedermolekulare Starter erhalten worden sind. Polyether mit OH-Zahlen von etwa 200 bis 400 sind besonders bevorzugt.
»Mehr als bifunktionell« bedeutet im Sinne der Erfindung, daß auch bifunktionelle Polyether im Gemisch mit tri- und/oder höherfunktionellen Polyethern vorliegen können. Bevorzugt wird eine Funktionalität von 2,5 bis 4.
Wenngleich als Polyether erfindungsgemäß Ethylenoxidanlagerungsprodukte bevorzugt werden, ist es prinzipiell auch möglich, bis zu etwa 50 Gew.-% des angelagerten Ethylenoxids durch Propylenoxid bzw. andere Alkylenoxide zu ersetzen, wobei jedoch mit einer Verschlechterung des Intumeszenz- und Brandverhaltens der Intumeszenzmassen gerechnet werden muß, so daß die Mitverwendung von Polyethern, bei deren Herstellung neben Ethylenoxid andere Alkylenoxide, z. B. Propylenoxid mitverwendet werden kann, weniger bevorzugt ist.
Die Herstellung der Polyether erfolgt nach dem Fachmann bekannten Methoden, wie sie in der Polyetherchemie üblich sind.
Als niedermolekulare Startermoleküle kommen die für die Herstellung von Polyethern an sich bekannten Verbindungen in Frage, z. B. Wasser, Ethylenglykol, Propylenglykol, Butandiol, Trimethylolpropan, Glyzerin, Triethanolamin, Pehtaerythrit, Ethylendiamin, Toluylendiamine, die verschiedensten Zucker und deren Hydrierungsprodukte, Formosen und Formite, Anilin, Polyalkylenpolyamine, Benzidine bzw. deren Hydrierungsprodukte, Anilin-Formaldehydkondensate und deren Hydrierungsprodukte. Auch aliphatische und aromatische Polycarbonsäuren sind als Starter in Betracht zu ziehen, auch Aminosäuren oder Aminoalkohole wie Ethanolamin.

4. Cyanursäure und/oder ihre Derivate d. h. Cyanursäure bzw. Verbindungen, die sich als Cyanursäure- bzw. Isocyansäureabkömmlinge verstehen lassen. Solche sind z. B. Cyanamid, Dicyanamid, Dicyandiamid, Guanidin und dessen Salze, Biguanid, Urazol, Urazolcyanurat, Melamincyanurat, Cyanursäuresalze und Cyanursäureester und -amide, insbesondere Melamin, das wegen seiner guten Zugänglichkeit bevorzugt wird.
Als Melamin wird vorzugsweise der Grundkörper 2,4,6-Triamino-s-Triazin verstanden, es sind jedoch auch z. B. dessen durch thermische Behandlung oder Umsetzung mit Formaldehyd erhältlichen Kondensationsprodukte in Betracht zu ziehen.

5. Gegebenenfalls Wasser und

6. gegebenenfalls weitere organische Verbindungen mit gegenüber Isocyanaten reaktionsfähigen Wasserstoffatomen.
Hierzu zählen:

a) Verbindungen mit mindestens zwei gegenüber Isocyanaten reaktionsfähigen Wasserstoffatomen von einem Molekulargewicht in der Regel von 400—10 000. Hierunter versteht man neben Aminogruppen, Thiolgruppen oder Carboxylgruppen aufweisenden Verbindungen

vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 1000 bis 3000, z. B. mindestens zwei, in der Regel 2 bis 8, vorzugsweise aber 2 bis 4, Hydroxylgruppen aufweisende Polyester, andere als die unter 3) genannten Polyether, Polythioether, Polyacetale, Polycarbonate und Polyesteramide, wie sie für die Herstellung von homogenen und von zellförmigen Polyurethanen an sich bekannt sind.
Die in Frage kommenden Hydroxylgruppen aufweisenden Polyester sind z B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.
Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid,

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.
Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Äthylenglykol, Propylenglykol--(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. $\varepsilon$-Caprolacton, oder aus Hydroxycarbonsäuren, z. B. $\omega$-Hydroxycapronsäure, sind einsetzbar.
Auch die in Frage kommenden, mindestens zwei, in der Regel zwei bis acht, vorzugsweise zwei bis drei, Hydroxylgruppen aufweisenden anderen als unter 3) genannten Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungschriften 2 639 083 bzw. 2 737 951), kommen erfindungsgemäß in Frage.
Vertreter der genannten erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32—42 und Seiten 44—54 und Band II, 1964, Seiten 5—6 und 198—199, sowie im Kunststoff-Handbuch, Band VII, Vieweg-Höchtlen, Carl-Hanser-Verlag, München, 1966, z. B. auf den Seiten 45—71, beschrieben. Selbstverständlich können Mischungen der obengenannten Verbindungen mit mindestens zwei gegenüber Isocyanaten reaktionsfähigen Wasserstoffatomen mit einem Molekulargewicht von 400—10 000, z. B. Mischungen von Polyäthern und Polyestern, eingesetzt werden.

b) Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.
Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.
Als Beispiele für derartige Verbindungen seien genannt:
Äthylengykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glycerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-Hydroxymethyl-hydrochinon, Äthanolamin, Diäthanolamin, N-Methyldiäthanolamin, Triäthanolamin und 3-Aminopropanol.
Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532).
Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).
Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (»Isophorondiamin«), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z. B. β-Semicarbazidopropionsäurehydrazid (DE-Offenlegungsschrift 1 770 591), Semicarbazido-alkylencarbazinester wie z. B. 2-Semicarbazidoäthyl-carbazinester (DE-Offenlegungsschrift 1 918 504) oder auch Amino-semicarbazid-Verbindungen wie z. B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).
Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diamino-diphenylmethan.

Die Mitverwendung der letztgenannten Reaktionskomponenten (6) kann zwar in Betracht gezogen werden, erfordert im Einzelfall jedoch ein Abwägen der dadurch möglichen Nachteile im Brandverhalten.

Es wurde gefunden, daß für die vorteilhaften Eigenschaften der neuen Intumeszenzmassen, insbesondere der Intumeszenzschäume, nicht die für die konventionelle Polyurethanchemie üblichen stöchiometrischen Verhältnisse charakteristisch sind. Vielmehr werden die Komponenten 2, 3, 4 und ggf. 5 ungeachtet der in bezug auf die Isocyanatchemie zu fordernden Stöchiometrie zusammengestellt und die so erhältliche Mischung in einfachen Vorversuchen mit verschiedenen, innerhalb eines erfindungsgemäß gegebenen Mengenspielraums liegenden Mengen des Polyisocyanats umgesetzt, um

die gewünschte optimale Wirksamkeit impirisch zu ermitteln.

Die so gefundenen Richtmengen für die einzelnen Komponenten 2, 3, 4 und ggf. 5 und 6 in dem mit dem Polyisocyanat umzusetzenden Reaktionsgemisch ergänzen sich zu 100% und betragen:

- für die mindestens zwei Hydroxylgruppen aufweisenden phosphorhaltigen Kondensationsprodukte (2):
  10 bis 45, vorzugsweise 15 bis 35 Gew.-%,
- für die Polyhydroxylverbindungen (3):
  20 bis 55, vorzugsweise 25 bis 45%,
- für die Cyanursäurederivate (4):
  10 bis 60, vorzugsweise 20—50 Gew.-%,
- für Wasser (5):
  0 bis 10, vorzugsweise 0 bis 5 Gew.-%,
- für die weitere organische Verbindung mit gegenüber Isocyanaten aktiven H-Atomen (6):
  0 bis 25, vorzugsweise 0 bis 15 Gew.-%.

100 Gew.-Teile dieses Reaktionsgemisches werden in der Regel mit 15 bis 55, vorzugsweise 25 bis 45 Gew.-Teilen des Polyisocyanats umgesetzt.

Die Herstellung der Intumeszenzmassen kann in einem Lösungsmittel, vorzugsweise jedoch lösungsmittelfrei, erfolgen. Von besonderem Interesse sind Schaumstoffe; diese können Raumgewichte von ca. 40 bis 900 kg/m³, bevorzugt zwischen 80 und 600 kg/m³, aufweisen. Eine besonders ausgewogene Kombination zwischen aus Gründen der Isolierfähigkeit angestrebtem niedrigem Raumgewicht und für die Aufschäumwirkung bei Flammenzutritt in der Raumeinheit notwendiger Masse stellen erfindungsgemäß zugängliche Schaumstoffe mit Raumgewichten von ca. 150 bis 600 kg/cm³ dar.

Man kann die verschiedenen Reaktionskomponenten einzeln zusammenführen; zweckmäßigerweise jedoch macht man eine Vormischung aus den mit den Polyisocyanaten (Komponente 1) reaktionsfähigen Komponenten 2, 3, 4 und gegebenenfalls 5 und erhält so gegebenenfalls nach kurzem Erwärmen eine flüssige Reaktionskomponente, in der alle notwendigen Bestandteile bis auf das Polyisocyanat enthalten sind. Auf diese Weise lassen sich die erfindungsgemäßen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, der Komponentenvormischung gegebenenfalls auch dem Isocyanat, noch weitere Rezepturbestandteile zuzusetzen, z. B. Harnstoff, Harnstoffkondensate, Formaldehydkondensate, Phenolharze, Phosphate, Aminpolyphosphate, Phosphorsäureester z. B. Trikresylphosphat oder Dibutylkresylphosphat, Al-Oxidhydrate, Glaspulver, Vermiculite, massive oder hohle Glas- oder sonstige Silikatperlchen und sonstige das Brandverhalten modifizierende Zusatzstoffe.

Obgleich es überraschenderweise nicht notwendig ist, zur Herstellung der erfindungsgemäßen gegebenenfalls geschäumten Intumeszenzmassen Katalysatoren für die Schaumstoffbildung oder sonstige Hilfsmittel, wie sie sonst in der Schaumstoffchemie üblich sind, beispielsweise auch zusätzlich gasförmige oder niedrig siedende Treibmittel, bzw. Treibgaserzeuger mitzuverwenden, können solche zusätzlichen Hilfsmittel, ebenso wie emulgierende, Schaum stabilisierende, trennende, farbgebende, konservierende, Hydrolysenschutz vermittelnde, geruchsaktive oder sonstige Zusatzstoffe natürlich im Einzelfall als Rezepturkomponente in Betracht gezogen werden. Beispielsweise führt die Mitverwendung von zur Carbodiimidbildung Anlaß gebenden Katalysatoren, wie sie z. B. in der Klasse der Phospholinoxide wie etwa 1-Methyl-1-oxo-phospholin, bekannt sind, zu Intumeszenzmassen mit verbesserter Stabilität gegen Hydrolyse.

Weiterhin ist in Betracht zu ziehen, auch solche Zusatzstoffe rezepturmäßig in den erfindungsgemäßen Intumeszenzmassen mit einzusetzen, die die Schaumbildung im Falle der Beflammung steigern helfen können. Solche sind beispielsweise aliphatische und insbesondere aromatische Hyroxycarbonsäuren wie Salicylsäure oder p-Hydroxybenzoesäure, PVC, Kohlehydrate oder bei erhöhter Temperatur Wasser, Stickstoff oder $CO_2$ abgebende Substanzen wie Triazole Azodicarbonamide, Sulfohydrazide oder Harnstoff-dicarbonsäureanhydrid.

Man kann aus den erfindungsgemäßen Intumeszenzmassen z. B. durch Einarbeiten in oder Aufrakeln auf Textilien aus organischen oder anorganischen Fasern, durch Sprühen, Verpressen oder Formgießen und Gelieren, durch Schneiden oder Schmelzen, Formkörper oder Beläge fabrizieren, die bei Temperaturen zwischen ca. 200 und 350° C aufschäumen und so eine Flammenausbreitung verhindern, die also als Dichtelemente, Sicherungsvorrichtung, Brandsperren geeignet sind. Man kann Verfugungen vornehmen, Kabeldurchbrüche, Maueröffnungen verschließen, wobei z. B. auch eine Art Beton aus dem Intumeszenzmittel und Steinen und/oder geblähten Teilchen wie Blähton, Blähglas, Vermiculite, Perlit u. ä. und/oder auch Schaumstoffperlen auf z. B. Polystyrolbasis hergestellt und verwendet werden kann.

Von Interesse ist auch die Herstellung von Brandschutz vermittelnden Polsterbeschichtungen, Polsterbelägen und Textilbeschichtungen bzw. Textilkaschierungen mittels der neuen, flexiblen Intumeszenzmassen.

Ebenfalls ist von Interesse die Herstellung von gegebenenfalls armierten Beschichtungen nahezu beliebiger Dicke auf Metall, z. B. Stahlträgern und -blechen, Holz, z. B. Türblättern, Dachbalken, auf Mauerwerk, auf Kunststoffen, seien es Kabelisolierungen oder Schaumstoffplatten. Wenn man die Beschichtungen auf einer tragfähigen Platte oder Stützkonstruktion vornimmt, z. B. in bzw. auf einer Reckmetallplatte, einer Wabenplatte aus Metall, Pappe, Papier, Holz, Keramik oder Kunststoff, dann können so leicht feuerhemmende Platten oder Wandelemente hergestellt werden.

Die Intumeszenzmassen sind auch für die Herstellung von Antidröhnbelägen oder Schallschutzelementen von Interesse, sowie für Zwecke der Energieabsorption.

Auch die Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile, z. B. aus elastischem Material, mit den erfindungsgemäßen Intumeszenzmassen füllen oder hinterfüllen und so eine Brandschutzdichtung erzielen. Durch geeignete Anordnung kann man in Kaminen, Lüftungs- und Klimaanlagen, Rohrleitungen und Ein-/Austrittsöffnungen Sperren aufbauen, die im Fall einer Erhitzung auf ca. 300° C, bis 400° C den weiteren Durchtritt von Gasen bremsen oder verhindern. Solche Anordnungen sind z. B. Stapel von in geringen Abständen parallel liegenden Platten, mit den Intumeszenzmassen beschichtete Siebe und Lochblenden oder mit Granulaten der Intumeszenzmassen locker gefüllte Rohrabschnitte, bzw. Rohre und Innenbeschichtung aus den erfindungsgemäßen Intumeszenzmassen. Die gegebenenfalls geschäumten Intumeszenzmassen können auch als Filterelemente für Gase eingesetzt werden, die sich bei zu großer Temperaturerhöhung verschließen.

Man kann auch z. B. Formkörper, die aus den Intumeszenzmassen leicht herstellbar sind, oder auch Granulate verschiedenster Körnung ein- oder mehrstufig verschäumen, indem man sie auf Temperaturen über 200° C erhitzt, vorzugsweise auf Temperaturen zwischen 250 bis 1800° C; insbesondere 300—800° C. Die Verschäumung kann frei oder in geschlossenen oder offenen Formen vorgenommen werden, wobei diese Formen zweckmäßigerweise Öffnungen zum Austritt von Dampf und Luft aufweisen sollten.

Hierbei entstehen feuerabweisende Schaumstoffe, sogenannte Carbonisierungsschäume.

Das Erhitzen kann durch Strahlungswärme, durch Behandeln mit Heißdampf oder Heißluft oder sonstigen heißen Gasen, durch Mikrowellen oder Hochfrequenz bzw. durch Wärmeleitung in Luft oder Flüssigkeitsbädern bzw. Metallbädern geschehen.

Man kann die erfindungsgemäßen Intumeszenzmassen auch auf Trägermaterialien aufbringen und dort verschäumen, z. B. indem man Blähtonteilchen beschichtet, dann in eine Form schüttet und dort erhitzt, wobei ein Block aus in Carbonisierungsschaum eingebettetem Blähton entsteht. Eine entsprechend beschichtete Holz- oder Eisenplatte kann bei ca. 250° C zu einer Schaumstoffkombinationsplatte verarbeitet werden, wobei die Schaumstoffoberfläche durch eine weitere Holz- oder Eisenplatte abgedeckt werden kann.

Zu erwähnen ist auch das Ausschäumen von Hohlräumen, z. B. in Kabelschächten, aber auch in Ziegelsteinen und sonstigen Baustoffen, was z. B. durch Einbringen der Reaktionsmischungen oder fertigen Schaumstoff-Intumeszenzmassen in geeigneter Menge in den Hohlraum des kalten oder noch warmen Steines gelingt.

Die erfindungsgemäßen Intumeszenzmassen sind auch in Form von Rohrhalbschalen oder von Vollmänteln zur Isolierung von Rohren oder Kabeln geeignet. Von Interesse ist, daß die Isolierung auch in situ vorgenommen werden kann, indem man das Rohr oder das zu isolierende Stück mit dem Reaktionsgemisch beschichtet und zum Aufschäumen bringt.

Die Herstellung und Verarbeitung der zu den Intumeszenzmassen führenden Reaktionsgemische kann kontinuierlich oder diskontinuierlich erfolgen. Man kann die Komponenten einzeln oder als Gemische zusammenführen. Vorzugsweise werden alle Reaktionskomponenten bis auf das Isocyanat zusammengefaßt, so daß eine 2-Komponentenverarbeitung erfolgen kann, z. B. in normalen Handrührgefäßen mit mechanischen Rührern, in Rührwerks- oder Düsen- oder Sprühmischköpfen oder in Statikmischern, wie sie auch aus der Polyurethanchemie bekannt sind. Die Ausreaktion kann in gekühlten, kalten oder beheizten Formen drucklos oder unter Druck erfolgen.

Die folgenden Versuche sollen den Erfindungsgegenstand beispielhaft erläutern, nicht aber einschränken. Die angegebenen Teile sind Gewichtsteile und/oder Gewichtsprozente, falls nicht anders vermerkt ist.

Die folgenden Versuchsreihen sollen den Zusammenhang zwischen Rezeptur und Eigenschaften der erfindungsgemäß zugänglichen Intumeszenzmassen beispielhaft erläutern.

Als Ausgangsmaterialien werden verwendet:

Als Polyisocyanat (1) ein durch Phosgenierung von Anilin-Formaldehyd-Kondensaten erhaltenes, handelsübliches technisches Polyisocyanatisomerengemisch mit einem Gehalt von ca. 90% Zweikerndiisocyanaten und ca. 10% Mehrkernpolyisocyanaten, als phosphorhaltiges Kondensationsprodukt (2) wird

$$(C_2H_5O)_2PO \cdot CH_2N(C_2H_4OH)_2$$

in technischer Qualität verwendet, hier bezeichnet als P-Diol (2).

Als Cyanursäurederivate (4) werden verwendet Dicyanidiamid (hier bezeichnet als 4d) Melamin (hier bezeichnet als 4m).

Als Polyether werden verwendet

3a: Anlagerungsprodukt von Ethylenoxid an Glyzerin, OH-Zahl 254
3b: Anlagerungsprodukt von Ethylenoxid an Glyzerin, OH-Zahl 200
3c: Anlagerungsprodukt von Ethylenoxid an Trimethylolpropan, OH-Zahl 150
3d: Anlagerungsprodukt von Ethylenoxid an Glykol, OH-Zahl 172
3e: Anlagerungsprodukt von einem Gemisch aus 40 Gew.-% Propylenoxid und 60 Gew.-% Ethylenoxid an o-Tolamin, OH-Zahl 430
3f: Anlagerungsprodukt von Propylenoxid an Glyzerin, OH-Zahl 255
3g: Anlagerungsprodukt von 40 Gew.-% Propylenoxid und 60 Gew.-% Ethylenoxid an ein Gemisch aus gleichen Gew.-Teilen Glyzerin und Propylenglykol, OH-Zahl 26
3h: Anlagerungsprodukt von Ethylenoxid an Triethanolamin, OH-Zahl 230.

Beispiel 1

Es wird eine Mischung hergestellt aus 37,5 Teilen Melamin (4m), 0,8 Teilen Wasser, 39 Teilen Polyether (3a) sowie 22,7 Teilen P-Diol (2). In dieses Gemisch wird bei Raumtemperatur das Polyisocyanat in der Menge von 36 Teilen eingerührt.

Nach ca. 40 Sek. beginnt das Aufschäumen, und man erhält einen Weichschaumstoff mit regelmäßiger, relativ grober Porenstruktur und ausgezeichneter Schaumstabilität, der ein Raumgewicht von ca. 180 kg/$m^3$ besitzt.

Der Versuch führt zu einem gleichartigen Ergebnis, wenn das Polyisocyanat und das Reaktionsgemisch simultan anteilig einem Rührwerksmischkopf durch Pumpen zugeführt und dort intensiv vermischt wird. Die reagierende Mischung verläßt den Mischkopf durch eine Düse und wird auf ein Transportband abgelegt, wo sie dann aufschäumt. Man erhält so in kontinuierlicher Fahrweise einen Intumeszenzschaumstoff.

Der hergestellte Schaumstoff wird als Würfel von 2 cm Kantenlänge auf einem Trägerblech flächig mit der Flamme eines Bunsenbrenners beflammt. Der Schaumstoff beginnt zu verkohlen und schäumt dabei stark auf. Das Aufschäumen ist der Flamme entgegengerichtet. Sowie man die Flamme entfernt, ist die beflammte Probe erloschen. Nachbrennen wird nicht beobachtet.

Eine gleichartige Materialprobe wird 5 Tage in 500 ml Wasser bei Raumtemperatur gelagert, dann abgespült und getrocknet. Sie zeigt im geschilderten Beflammungstest das gleich gute Intumeszenzverhalten. Eine weitere Materialprobe wird 5 Tage bei 120°C gelagert und dann geprüft. Sie zeigt im Beflammungstest das gleich gute Intumeszenzverhalten. Ein Nachbrennen wird nicht beobachtet.

Beispiel 2

Es wird gemäß Beispiel 1 gearbeitet, jedoch anstelle von Melamin jetzt Dicyandiamid (4d) eingesetzt. Man erhält einen Schaumstoff mit Raumgewicht 200 kg/$m^3$, der ein gegenüber Beispiel 1 im Beflammungstest noch stärkeres Aufschäumen zeigt.

Beispiel 3

Es wird wie in Beispiel 1 gearbeitet, jedoch das Wasser weggelassen. Man erhält ein gummiartiges, jedoch noch poriges Material, das ein Raumgewicht um 600 kg/$m^3$ besitzt. Es ist nicht klebrig.

Die gleiche Reaktionsmischung wird in frisch hergestelltem Zustand in eine Plattenform eingetragen, in der sie zu einer Platte von 10 × 10 × 1 cm zwischen teflonisierten Metallwänden aushärtet, wobei ein zur Herstellung von Dichtungselementen geeignetes Halbzeug mit glatter, stabiler Außenhaut entsteht.

Beflammt man diese Platte mit einer Bunsenbrennerflamme, so wird nach Entfernen der Flamme zu verschiedenen Zeiten des Beflammungsversuches kein Nachbrennen beobachtet. An der Beflammungszone entsteht eine sich stark in Richtung der Flammenquelle ausdehnende Schicht aus Korbonisierungsschaum, die die dahinter liegenden Bezirke des Werkstücks vor weiterem Flammenzutritt schützt.

Gießt man mit dem Reaktionsgemisch eine in einer 10 cm starken Schaumbetonmauer befindliche Öffnung von 20 × 20 cm aus und testet diesen Prüfkörper in einer Kleinbrandkammer, die mit einem Ölbrenner bestückt ist und nach 50 Min. eine Innentemperatur von 900°C erreicht, so widersteht der so ausgefüllte Mauerdurchbruch der Beflammung mehr als 90 Minuten. Um diese Zeit wird eine Temperatur von ca. 40°C auf der Außenseite gemessen. Die der Flamme zugekehrte Seite der Maueröffnung ist von einem isolierenden Karbonisierungsschaum ausgefüllt.

Beispiel 4

Es wird gemäß Beispiel 1 gearbeitet, jedoch unter Verwendung von 42 Teilen Polyisocyanat. Der entstandene Schaumstoff hat ein Raumgewicht von 220 kg/$m^3$ und zeichnet sich bei gleich gutem Beflammungsverhalten lediglich durch eine größere Steifigkeit aus, ist jedoch noch flexibel.

Beispiel 5

Es wird analog Beispiel 1 unter Verwendung von Polyether 3b in gleicher Menge gearbeitet. Es wird ein Schaumstoff mit Raumgewicht 175 kg/$m^3$ und etwa gleicher Flexibilität erhalten. Im Beflammungstest werden analog Beispiel 1 gleichartige gute Intumeszenzeigenschaften gefunden. Nachbrennen wird nicht festgestellt.

Beispiel 6

Es wird analog Beispiel 1 gearbeitet, anstelle von Polyether 3a jedoch ein Gemisch aus gleichen Teilen Polyether 3a und 3c in gleicher Einsatzmenge verwendet. Der erhältliche Schaumstoff hat ein Raumgewicht von 190 kg/$cm^3$. Im Beflammungstest verhält er sich wie der gemäß Beispiel 1 erhaltene Schaumstoff.

Beispiel 7

Es wird analog Beispiel 1, jedoch unter zusätzlicher Mitverwendung von 6 Teilen Polyether 3d gearbeitet, welches in der Wärme in Polyether 3a gelöst wird, der erhaltene Schaumstoff unterscheidet sich weder im Erscheinungsbild noch im Verhalten bei Beflammung vom gemäß Beispiel 1 erhaltenen Material.

Beispiel 8

(Vergleichsversuche)

Hier soll gezeigt werden, wie sich die Mitverwendung von Propylenoxid bei der Polyetherherstellung negativ auf die Produkteigenschaften auswirkt: Es wird gemäß Beispiel 1 gearbeitet, jedoch werden 20, 40, 60, 80 und 100% des Polyethers 3a gegen den Polyether 3f ausgetauscht.

Zunächst zeigt sich, daß die in dieser Reihe erhaltenen Schaumstoffe zunehmend weniger stabil sind und zum Schrumpfen neigen. Bei der Beflammung zeigt sich, daß bereits bei 20% des Polyethers 3f ein vermindertes Aufschäumen in der Flamme eintritt, während der Schaumstoff in der Flamme zu fließen beginnt. Bis zu einem Gehalt von etwa 40% Polyether 3f wird kein Nachbrennen bei abnehmender Neigung zur Bildung von Carbonisierungsschaum in der Flamme beobachtet. Mit steigendem Gehalt von Polyether 3f wird dann eine zunehmende Tendenz zum Wegschmelzen des Schaumes in der Flamme bei gleichzeitigem Nachbrennen festgestellt. Der nur mit Polyether 3f hergestellte Schaum schmilzt in der Flamme total weg und brennt stark nach. Es wird festgestellt, daß ab etwa 45% an Polyether 3f die erhaltenen Produkte als Intumeszenzmassen nicht mehr geeignet sind.

Beispiel 9

(Vergleichsversuche)

Hier soll der negative Einfluß von Polyethern verdeutlicht werden, die sowohl Propylenoxid eingebaut enthalten als auch außerhalb der erfindungsgemäß angegebenen Grenzen liegende OH-Zahlen aufweisen.

Es wird gemäß Beispiel 1 gearbeitet. Man ersetzt jedoch 10 und 20% des Polyethers 3a durch den Polyether 3g. Man erhält flexible Schaumstoffe mit Raumgewichten um 300 kg/$m^3$. Im Beflammungstest wird nur ein geringes Aufschäumen beobachtet, andererseits zeigt bereits der 10% Polyether 3g enthaltende Schaum ein starkes Nachbrennen über mehr als 10 Sek., während der 20% Polyether 3 g enthaltende Schaum nach Entfernen der Flamme im Beflammungstest selbstständig weiterbrennt. In beiden Fällen ist keine Eignung als Intumeszenzmasse gegeben.

Beispiel 10

Es wird analog Beispiel 1 gearbeitet. Jedoch werden 40% des Polyethers 3a durch den Polyether 3e ersetzt, außerdem werden 42 Teile Polyisocyanat eingesetzt. Man erhält einen stabilen Schaumstoff mit Raumgewicht 260 kg/$m^3$ und guter Flexibilität. Im Beflammungstest wird eine hervorragende Intumeszenzwirkung beobachtet, jedoch kurzes Nachbrennen, das allerdings weniger als 5 Sekunden andauert. Dieses Intumeszenzmaterial kann als noch geeignet eingestuft werden.

Beispiel 11

Es wird analog Beispiel 1 gearbeitet, jedoch anstelle von Polyether 3a jetzt Polyether 3h in gleicher Menge eingesetzt. Man erhält einen stabilen Schaumstoff mit einem Raumgewicht von ca. 300. Im Beflammungstest wird ein besonders deutliches Intumeszenzverhalten beobachtet. Nachbrennen findet nicht statt.

Beispiel 12

Es wird analog Beispiel 1, jedoch ohne Wasser gearbeitet. Das Reaktionsgemisch wird in einer Plattenform ausgehärtet. Hierbei entsteht ein gummiartiges, schwach poriges Material mit guter Flexibilität. Man schneidet aus der Platte Dichtungsstreifen. Werden diese in einen Türfalz eingebaut, wobei sie die Türfuge gegen Luftdurchtritt als Dichtungselement schützen, so erfolgt bei Beflammung des Türfalzes ein starkes Aufschäumen, das den Türspalt gegen Durchtritt von Hitze und Flammengasen schützt. Die Halbzeugplatte selbst zeigt bei hervorragendem Aufschäumen in der Flamme kein Nachbrennen.

Beispiel 13

Das gemäß Beispiel 1 erhältliche Reaktionsgemisch wird in eine konisch geformte Rinne eingetragen und in dieser aus Polyethylen hergestellten Form zum Aufschäumen und Aushärten gebracht. Es entsteht ein V-förmiges Schaumstoffprofil, das leicht entformbar ist und im Scheitel einen Querschnitt von 1,8 cm, an der verbreiterten Basis einen Querschnitt von 2,5 cm bei einer Höhe von 4,5 cm besitzt.

Dieses Profilband wird in eine 2 cm breite Mauerfuge oberflächenbündig eingepreßt und zwar von beiden Seiten der 14 cm tiefen Fuge her. Ein Musterstück mit einer Fugenlänge von 40 cm wird in horizontaler wie auch in vertikaler Lage einem Brandtest in der bereits in Beispiel 3 verwendeten Kleinbrandkammer ausgesetzt. Es zeigt sich, daß nach 90 Minuten die Fugentemperatur gemessen auf der Oberfläche des dem Feuer abgewendeten Fugenverschlußmaterials (auf der Außenfläche des Prüfkörpers) noch unter 80°C liegt. Die Fuge bleibt gegen Durchtritt von Hitze und Flammengasen gesichert.

Beispiel 14

Es wird analog Beispiel 13 gearbeitet, jedoch unter Verwendung des gemäß Beispiel 4 erhältlichen Intumeszenzmaterials bzw. unter Verwendung des gemäß Beispiel 11 erhältlichen Intumeszenzmaterials. In beiden Fällen wird das gleiche befriedigende Ergebnis wie in Beispiel 13 beobachtet.

Beispiel 15

Aus dem gemäß den Beispielen 3 und 12 erhältlichen flexiblen Intumeszenzmaterial werden 1 cm dicke und 9 cm breite Streifen geschnitten. Diese Streifen werden parallel zur Längsachse geknickt, so daß ein V-förmiger Querschnitt entsteht, und so in eine 3 cm breite Mauerfuge eingedrückt. In der Fuge führen die Rückstellkräfte des Materials zu einem dichtenden Fugenverschluß. Im Brandkammerversuch gemäß Beispiel 13 widersteht die so gesicherte Fuge dem Durchtritt von Hitze und Flammengasen über mehr als 90 Minuten.

Beispiel 16

12 Teile Melamin, 0,5 Teile Wasser, 14,5 Teile P-Diol (2) werden mit 25 Teilen eines Polyethers mit der OH-Zahl 399, der durch Anlagerung von Ethylenoxid an Ethylendiamin hergestellt worden ist, gut vermischt. Dann wird das so hergestellte Gemisch einem Rührwerksmischkopf zugeführt, mit 25 Teilen

des Polyisocyanats vermischt und sofort auf ein Fließband aufgetragen. Nach wenigen Sekunden entsteht auf dem Band ein Schaumstoff, der nach ca. 70 Sek. ausgehärtet ist. Das Raumgewicht beträgt ca. 190 kg/$m^3$.

Im geschilderten Beflammungstest tritt kein Nachbrennen auf. Der Schaumstoff schäumt in der Flamme um mehr als 300 Vol.-% auf unter Ausbildung eines feinporigen, feuerabweisenden Karbonisierungsschaumes.

## Beispiel 17

Es wird wie bei Beispiel 16 gearbeitet, es werden jedoch als Polyisocyanat 20 Teile eines Gemisches aus gleichen Teilen des dort verwendeten Polyisocyanates und eines technischen Toluylendiisocyanatgemisches verwendet.

Der entstandene Schaum hat ein Raumgewicht von ca. 220 kg/$m^3$, er brennt im Beflammungstest nicht nach und bildet unter kräftigem Aufschäumen den feuerabweisenden Carbonisierungsschaum.

## Beispiel 18

Es wird wie bei Beispiel 16 gearbeitet, jedoch wird anstelle von Melamin ein Gemisch aus gleichen Teilen Melamin und Dicyandiamid verwendet, außerdem wird ohne Wasserzusatz gearbeitet.

Man erhält auf dem Fließband ein flexibles, hartgummiartiges Material, das Raumgewicht beträgt ca. 650 kg/$m^3$. Aus dem flexiblen Material werden Streifen mit einem Querschnitt von 1 cm x 3 cm geschnitten, diese werden in entsprechend dimensionierte Nuten, die in einen Türfalz eingefräst sind, eingeklebt, so daß sie bündig mit der Oberfläche der Zarge und des gegenüberliegenden Türblattes abschließen. Dieser Mustertürfalz ist durch diese Maßnahme gegen Durchtritt von Feuer und Flammengasen geschützt. Die eingebauten Streifen des Intumeszenzmaterials werden durch Erschütterungen, wie sie durch wiederholtes mechanisches »Türenknallen« oder durch Vibrationen, wie sie z. B. in einem Land-, Wasser- oder Luftfahrzeug zu erwarten sind, nicht verändert, z. B. können sie nicht herausbröckeln. Bei Beflammung des Türfalzes wird er durch das aufschäumende Intumeszenzmaterial dichtend verschlossen.

Im geschilderten Beflammungsversuch wird das Intumeszenzmaterial sehr gut beurteilt: Es schäumt um mehr als 200 bis 300 Volumenprozent auf, und es wird kein Nachbrennen beobachtet.

## Beispiel 19

Es wird wie bei Beispiel 16 gearbeitet, jedoch ohne Zusatz von Wasser. Das im Mischkopf entstandene Reaktionsgemisch wird in diesem Falle mittels eines Preßluftstrahls ausgetragen und auf einen gesandstrahlten Stahlträger aufgesprüht, auf dem es in wenigen Sekunden zu einer lederartigen Beschichtung aushärtet. Es wird eine etwa 10 mm dicke Materialschicht auf dem Träger abgelagert.

Eine Materialprobe der Beschichtung wird 18 Tage unter Wasser gelagert, dann mit Wasser abgespült und getrocknet. Sie zeigt im Beflammungsversuch anschließend die gleichen guten Intumeszenzeigenschaften wie eine nicht unter Wasser gelagerte Probe. Der Stahlträger wird nach 10tägiger Lagerung bei 50° C mit einem Erdgasbrenner beflammt. Es bildet sich eine ca. 5 cm starke Schicht aus feinporigem Carbonisierungsschaum, der den darunter liegenden Bezirk des Trägers mehr als 30 Minuten vor einem Temperaturanstieg auf über 450° C schützt.

## Beispiel 20

Es wird ein Gemisch hergestellt aus 24 Teilen Melamin (4 m), 0,5 Teilen Wasser, 14,5 Teilen P-Diol (2) sowie 25 Teilen eines Anlagerungsproduktes von Ethylenoxid an Ethylendiamin mit der OH-Zahl von 399.

Dieses Gemisch wird mit 23 Teilen Isocyanat (1) gut verrührt und in eine Becherform eingetragen, sobald Homogenität erzielt ist. In der Form beginnt das Reaktionsgemisch nach ca. 35 Sek. aufzuschäumen. Nach ca. 70 Sek. ist der Schaum klebfrei. Das Raumgewicht des feinporigen Materials beträgt etwa 250 kg/$m^3$, es hat zäh-plastischen Charakter. Beim Eindrücken erfolgt die Erholung vollständig aber langsam. Bei Beflammung eines Prüfkörpers gemäß Beispiel 1 wird eine sehr starke Schaumbildung festgestellt, Nachbrennen wird nicht beobachtet. Aus derartigem Material geschnittene ca.1 cm dicke Matten eignen sich als Antidröhnbeschichtung mit feuerabweisendem Intumeszenzcharakter, bzw. als Akustikbeschichtung im Automobilbau.

Beispiel 21

Es wird ein Gemisch hergestellt aus 24 Teilen Melamin (4m), 0,5 Teilen Wasser, 12,5 Teilen Polyol gemäß Beispiel 20, sowie 12,5 Teilen Polyether (3a) und 14,5 Teilen P-Diol (2). Dieses Gemisch wird in einem Düsenmischkopf mit 19 Teilen Polyisocyanat (1) vermischt und auf ein Fließband ausgetragen, wobei die Düse gemäß der Doppeltransportband-Technik zur kontinuierlichen Plattenfertigung das Fließband während des Durchlaufs überstreicht. Auch dem Band schäumt das Reaktionsgemisch zu einer ca. 5 cm dicken Schaumstoffmatte auf, Raumgewicht ca. 200 kg/m$^3$. Gegenüber den bisherigen Beispielen zeichnet sich diese geschäumte Intumeszenzmasse durch besondere Weichheit aus. Im Brandversuch wird bei Beflammung ein starkes Aufschäumen beobachtet. Nachbrennen ist nicht gegeben.

Bei Weglassen des Wassers in der Rezeptur wird ein weicher und poröser gummiartiger Werkstoff mit gleich günstigem Brandverhalten bei hervorragenden Intumeszenzeigenschaften erhalten.

Beispiel 22

Es wird analog Beispiel 1 gearbeitet. Als Polyisocyanat (1) wird jedoch jetzt ein dem dort verwendeten analog zugängliches Polyisocyanat mit dem Mehrkernpolyisocyanat-Anteil von ca. 20% eingesetzt.

In analoger Weise erhält man einen Intumeszenzschaumstoff mit einem Raumgewicht von ca. 200, der jedoch deutlich feinporiger als der gemäß Beispiel 1 erhaltene ist. Geht man mit dem Mehrkernpolyisocyanat-Anteil auf 40%, so ändert sich die Porenstruktur nur noch unwesentlich.

Die so erhältlichen Intumeszenzschaumstoffe zeigen im Beflammungstest bei hervorragendem Aufschäumen kein Nachbrennen über 5 Sek. Sie sind als Intumeszenzwerkstoffe geeignet.

Beispiel 23

24 Teile Melamin, 0,5 Teile Wasser, 25 Teile Polyol 3a, 3,2 Teile Tetraethylenglykol und 14,5 Teile F-Diol (2) werden gut vermischt und dann mit 25 Teilen Polyisocyanat (1) verrührt. Nach ca. 30 Sek. schäumt die Mischung auf, es bildet sich ein Intumeszenzschaumstoff mit Eigenschaften, die dem gemäß Beispiel 1 erhältlichen Material entsprechen.

Beispiel 24

Es wird wie bei Beispiel 23 gearbeitet. An Stelle von Tetraethylenglykol werden jedoch 3,5 Teile Ethylenglykol eingesetzt. Die entstandene Schaumstoffmasse wird in einem Kneter mastiziert und liefert dabei einen nicht klebenden plastischen Kitt. Dieser zeigt im Beflammungstest ein Aufschäumen auf über 300 Vol.-% und brennt nicht nach. Er kann als Intumeszenzkitt zum Sichern von Fugen oder Schlitzen in Mauerdurchbrüchen verwendet werden.

**Patentansprüche**

1. Gegebenenfalls geschäumte Intumeszenzmassen, erhalten durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. mehr als bifunktionellen Polyethern einer durchschnittlichen OH-Zahl von 150 bis 500, und die durch Anlagerung von Alkylenoxiden, die zu 50—100 Gew.-% aus Ethylenoxid bestehen, an niedermolekulare Starter erhalten worden sind, und
4. Cyanursäure und/oder Cyanursäurederivaten, und
5. gegebenenfalls Wasser und
6. gegebenenfalls weiteren organischen Verbindungen mit gegenüber Isocyanaten reaktionsfähigen Wasserstoffatomen.

2. Intumeszenzmassen gemäß Anspruch 1, erhalten durch Umsetzung von 15 bis 55 Gew.-Teilen eines Polyisocyanats (1) mit 100 Gew.-Teilen eines Gemisches, bestehend aus 10 bis 45 Gew.-% an mindestens zwei Hydroxylgruppen aufweisenden phosphorhaltigen Kondensationsprodukten (2) und 20 bis 55 Gew.-% an Polyethern (3) und 10 bis 60 Gew.-% an Cyanursäure(derivaten) (4) und 0 bis 10

Gew.-% Wasser (5) und/oder 0—25 Gew.-% an weiteren organischen Verbindungen mit gegenüber Isocyanaten reaktionsfähigen Wasserstoffatomen (6).

3. Intumeszenzmassen gemäß Anspruch 1 und 2, dadurch gekennzeichnet, daß als Polyisocyanate solche verwendet werden, wie sie durch Anilin-Formaldehyd-Kondensation und anschließende Phosgenierung erhalten werden.

4. Intumeszenzmassen gemäß Anspruch1 bis 3, dadurch gekennzeichnet, daß als mindestens zwei Hydroxylgruppen aufweisende Kondensationsprodukte solche der Formel

$$(RO)_2PO-CH_2-N=(CHX-CHX-OH)_2$$

in der

R = $C_1-R_8$-Alkyl oder $C_1-C_8$-Hydroxyalkyl und
X = H oder Methyl bedeuten,

verwendet werden.

5. Intumeszenzmassen gemäß Anspruch 1—4, dadurch gekennzeichnet, daß als Polyether Anlagerungsprodukte von Ethylenoxid an 3- bis 4-funktionelle Starter mit OH-Zahlen von 200 bis 400 verwendet werden.

6. Intumeszenzmassen nach Anspruch 1—5, dadurch gekennzeichnet, daß man als Cyanursäurederivate Melamin verwendet.

7. Verwendung der Intumeszenzmassen gemäß Anspruch 1 bis 6 als Hohlraumfüllungen, Fugenabdichtungen und Beschichtungen mit Intumeszenzeigenschaften.

8. Verwendung der Intumeszenzmassen gemäß Anspruch 1 bis 6, erhalten durch Reaktion in Formen oder durch nachträgliche Verformung der ausreagierten Reaktionsgemische, zur Herstellung von Formkörpern mit Intumeszenzeigenschaften.

**Claims**

1. Optionally foamed intumescent compositions obtained by reacting

1. polyisocyanates with
2. phosphorus-containing condensation products having at least two hydoxyl groups and obtainable by condensing primary or secondary, aliphatic, cycloaliphatic, aromatic, araliphatic or heterocyclic monoamines and/or polyamines optionally containing OH-groups, carbonyl compounds and dialkyl phosphites, optionally followed by alkoxylation, and
3. more than bifunctional polyethers having an average OH-number of from 150 to 500 which have been obtained by the addition of alkylene oxides, of which from 50 to 100% by weight consist of ethylene oxide, with low molecular weight starters, and
4. cyanuric acid and/or cyanuric acid derivatives and
5. optionally water and
6. optionally other organic compounds containing isocyanatereactive hydrogen atoms.

2. Intumescent compositions according to Claim 1, obtained by reacting from 15 to 55 parts by weight of a polyisocyanate (1) with 100 parts by weight of a mixture consisting of from 10 to 45% by weight of phosphorus-containing condensation products (2) having at least two hydroxyl groups and from 20 to 55% by weight of polyethers (3) and from 10 to 60% by weight of cyanuric acid (derivatives) (4) and from 0 to 10% by weight of water (5) and/or from 0 to 25% by weight of other organic compounds containing isocyanatereactive hydrogen atoms (6).

3. Intumescent compositions according to Claims 1 and 2, characterised in that the polyisocyanates used are of the type obtained by condensing aniline with formaldehyde, followed by phosgenation.

4. Intumescent compositions according to Claims 1 to 3, characterised in that the condensation products containing at least two hydroxyl groups used are those of the formula

$$(RO)_2PO-CH_2-N=(CHX-CHX-OH)_2$$

in which

R denotes $C_1-C_8$-alkyl or $C_1-C_8$-hydroxy alkyl and
X denotes H or methyl.

5. Intumescent compositions according to Claims 1—4, characterised in that addition products of ethylene oxide with 3- to 4-functional starters having OH-numbers of from 200 to 400 are used as the polyethers.

6. Intumescent compositions according to Claims 1—5, characterised in that melamine is used as the cyanuric acid derivative.

7. The use of the intumescent compositions according to Claims 1 to 6 as cavity-filling, gap-sealing and coating materials having intumescent properties.

8. The use of the intumescent compositions according to Claims 1 to 6, obtained by reaction in moulds or by subsequent forming of the fully reacted reaction mixtures, for the production of mouldings having intumescent properties.

**Revendications**

1. Matières intumescentes éventuellement cellulaires, obtenues par réaction

1. de polyisocyanates avec
2. des produits de condensation contenant du phosphore, présentant au moins deux groupes hydroxyle, pouvant être obtenus par condensation de monoamines et/ou de polyamines aliphatiques, cycloaliphatiques, aromatiques, araliphatiques ou hétérocycliques primaires ou secondaires contenant éventuellement des groupes OH, de composés carbonyliques et de phosphites de dialkyle, le cas échéant avec oxalkylation subséquente, et
3. de polyéthers de fonctionnalité supérieure à deux ayant un indice d'hydroxyle moyen de 150 à 500 et qui ont été obtenus par addition d'oxydes d'alkylène, formés à 50—100% en poids d'oxyde d'éthylène, sur des composés d'amorçage de bas poids moléculaire, et
4. d'acide cyanurique et/ou de dérivés d'acide cyanurique, et
5. le cas échéant d'eau et
6. éventuellement d'autres composés organiques, présentant des atomes d'hydrogène aptes à réagir avec des isocyanates.

2. Matières intumescentes suivant la revendication 1, obtenues par réaction de 15 à 55 parties en poids d'un polyisocyanate (1) avec 100 parties en poids d'un mélange formé de 10 à 45% en poids de produits de condensation (2) contenant du phosphore, portant au moins deux groupes hydroxyle, et 20 à 55% en poids de polyéthers (3) et 10 à 60% en poids d'acide ou de dérivés d'acide cyanurique (4) et 0 à 10% en poids d'eau (5) et/ou 0 à 25% en poids d'autres composés organiques présentant des atomes d'hydrogène (6) aptes à réagir avec des isocyanates.

3. Matières intumescentes suivant les revendications 1 et 2, caractérisées en ce qu'on utilise comme polyisocyanates des polyisocyanates qui sont obtenus par condensation aniline-formaldéhyde suivie d'une phosgénation.

4. Matières intumescentes suivant revendications 1 à 3, caractérisées en ce qu'on utilise comme produits de condensation comportant au moins deux groupes hydroxyle, des produits de formule:

$$(RO)_2PO-CH_2-N=(CHX-CHX-OH)_2$$

dans laquelle

R = alkyle en $C_1-C_8$ ou hydroxyalkyle en $C_1-C_8$ et
X = H ou méthyle.

5. Matières intumescentes suivant les revendications 1—4, caractérisées en ce qu'on utilise comme polyéthers des produits d'addition de l'oxyde d'éthylène sur des composés d'amorçage de fonctionnalité égale à 3—4 ayant des indices d'hydroxyle de 200 à 400.

6. Matières intumescentes suivant les revendications 1—5, caractérisées en ce qu'on utilise la mélamine comme dérivé d'acide cyanurique.

7. Utilisation des matières intumescentes suivant les revendications 1 à 6 comme produits de remplissage de cavités, comme matières étanches pour joints et comme revêtements à propriétés d'intumescence.

8. Utilisation des matières intumescentes suivant le revendications 1 à 6, obtenues par réaction dans des moules ou par mise en œuvre ultérieure des mélanges ayant réagi, pour la production de pièces moulées à propriétés d'intumescence.